# EUROPEAN PATENT APPLICATION

(11) **EP 4 787 202 A1**
(43) Date of publication of application: **05.08.2026**
(21) Application number: 25784926.5
(22) Date of filing: 16.09.2025
(51) Int. Cl.: G06F 21/30, G06F 21/36, G06T 1/00

(54) **ELECTRONIC DEVICE AND CONTROL METHOD THEREOF**

(30) Priority: 09.12.2024 KR 20240181603
(71) Applicant: Samsung Electronics Co., Ltd, Suwon-si, Gyeonggi-do 16677 (KR)
(72) Inventor: LEE, Youngju, Suwon-si, Gyeonggi-do 16677 (KR); YU, Inhwa, Suwon-si, Gyeonggi-do 16677 (KR); KO, Chinok, Suwon-si, Gyeonggi-do 16677 (KR); LEE, Jangwoo, Suwon-si, Gyeonggi-do 16677 (KR)
(74) Representative: Gulde & Partner
(86) International application number: PCT/KR2025/014424
(87) International publication number: WO 2026/127289

(57) **Abstract**

Provided is an electronic apparatus including: a communication device configured to communicate with a terminal device; a memory storing at least one instruction; and at least one processor configured to execute the at least one instruction, wherein the at least one processor is configured to store image information corresponding to an image in the memory, and perform a function corresponding to authentication for the terminal device based on data received from the terminal device and the information corresponding to the image if the data corresponding to the image obtained using a camera included in the terminal device is received from the terminal device through the communication device.

## Description

### [Technical Field]

The present disclosure relates to an electronic apparatus capable of performing authentication for a terminal device based on capture information obtained by the terminal device capturing a display screen, and a controlling method thereof.

### [Background Art]

A display device may display an image, and the display device (or a set-top box) may be controlled not only through a button provided thereon or a remote control separate therefrom, but also through a user terminal device.

However, controlling the display device through the terminal device may require a connection process between the terminal device and the display device.

### [Disclosure of Invention]

### [Technical Problem]

The present disclosure addresses at least one problem or disadvantage described above and provides an advantage described below. The present disclosure provides an electronic apparatus capable of authenticating a terminal device based on capture information obtained by the terminal device capturing a display screen, and a controlling method thereof.

Additional embodiments will be described in the detailed description provided below. Some will be apparent from the detailed description, while others may be derived from the described embodiments.

### [Solution to Problem]

The invention is defined by the appended claims.

According to an embodiment of the present disclosure, provided is an electronic apparatus. The apparatus includes: a communication device configured to communicate with a terminal device; a memory storing at least one instruction; and at least one processor configured to execute the at least one instruction, wherein the at least one processor is configured to store image information corresponding to an image in the memory, and perform a function corresponding to authentication for the terminal device based on data received from the terminal device and the information corresponding to the image if the data corresponding to the image obtained using a camera included in the terminal device is received from the terminal device through the communication device.

The at least one processor may be configured to control screen brightness to change within a predetermined time, and perform the function corresponding to the authentication for the terminal device based on correspondence between the data received from the terminal device and the information corresponding to the image and a brightness change pattern corresponding to the change in the screen brightness.

The at least one processor may be configured to obtain characteristic information including at least one of a screen size or model information corresponding to the electronic apparatus based on the data received from the terminal device, and perform the function corresponding to the authentication for the terminal device based on correspondence between the data received from the terminal device and the information corresponding to the image and the characteristic information.

The at least one processor may be configured to obtain a data type corresponding to the authentication based on the image, and control the communication device to transmit information corresponding to the obtained data type to the terminal device.

The at least one processor may be configured to store the information corresponding to the image output from the electronic apparatus in the memory if information related to obtaining the data corresponding to the image is received from the terminal device by using the camera included in the terminal device through the communication device.

The at least one processor may be configured to obtain information corresponding to communication latency between the terminal device and the electronic apparatus, and obtain an image serving as a basis of the function corresponding to the authentication among the information corresponding to the image based on the information corresponding to the communication latency.

The at least one processor may be configured to control the memory to store audio information corresponding to the image, and perform the function corresponding to the authentication for the terminal device based on audio information included in the data received from the terminal device and the audio information corresponding to the image.

The at least one processor may be configured to perform the function corresponding to the authentication for the terminal device by using the audio information included in the data received from the terminal device and audio information having a predetermined frequency or higher among the audio information corresponding to the image.

The apparatus may include a speaker, wherein the at least one processor may be configured to control the speaker to output an audio signal having a predetermined pattern at an inaudible frequency, and perform the function corresponding to the authentication for the terminal device if the predetermined pattern is included in audio information included in the data received from the terminal device.

The at least one processor may be configured to control the communication device to transmit at least one of state information of the electronic apparatus or information related to a user interface (UI) corresponding to control of the electronic apparatus to the terminal device if the function corresponding to the authentication for the terminal device is performed.

According to an embodiment of the present disclosure, provided is a controlling method of an electronic apparatus, the method including: storing image information corresponding to an image; receiving data corresponding to the image obtained using a camera included in a terminal device from the terminal device; and performing a function corresponding to authentication for the terminal device based on the data received from the terminal device and the information corresponding to the image.

The method may include controlling screen brightness to change within a predetermined time, wherein in the performing of the function, the function corresponding to the authentication for the terminal device may be performed based on correspondence between the data received from the terminal device and the information corresponding to the image and a brightness change pattern corresponding to the change in the screen brightness.

In the performing of the function, characteristic information including at least one of a screen size or model information corresponding to the electronic apparatus may be obtained based on the data received from the terminal device, and the function corresponding to the authentication for the terminal device may be performed based on correspondence between the data received from the terminal device and the information corresponding to the image and the characteristic information.

The method may include: obtaining a data type corresponding to the authentication based on the image; and transmitting information corresponding to the obtained data type to the terminal device.

In the storing, the information corresponding to the image output from the electronic apparatus may be stored if information related to obtaining the data corresponding to the image is received from the terminal device by using the camera included in the terminal device.

The method may include obtaining information corresponding to communication latency between the terminal device and the electronic apparatus, wherein in the receiving of the data, an image serving as a basis of the function corresponding to the authentication among the information corresponding to the image is obtained based on the information corresponding to the communication latency.

In the storing, audio information corresponding to the image may be stored, and in the performing of the function, the function corresponding to the authentication for the terminal device may be performed based on audio information included in the data received from the terminal device and the audio information corresponding to the image.

In the performing of the function, the function corresponding to the authentication for the terminal device may be performed using the audio information included in the data received from the terminal device and audio information having a predetermined frequency or higher among the audio information corresponding to the image.

The method may include outputting an audio signal having a predetermined pattern at an inaudible frequency, wherein in the performing of the function, the function corresponding to the authentication for the terminal device is performed if the predetermined pattern is included in audio information included in the data received from the terminal device.

According to an embodiment of the present disclosure, provided is a non-transitory computer-readable recording medium storing a program for executing a controlling method of an electronic apparatus, the method includes storing image information corresponding to an image, receiving data corresponding to the image obtained using a camera included in a terminal device from the terminal device, and performing a function corresponding to authentication for the terminal device based on the data received from the terminal device and the information corresponding to the image.

### [Brief Description of Drawings]

The above and/or other aspects of the present disclosure will be more apparent by the description provided below with reference to the accompanying drawings, in which:
FIG. 1 is a diagram for describing an authentication operation in an electronic system according to an embodiment of the present disclosure;
FIG. 2 is a block diagram showing a configuration of an electronic apparatus according to an embodiment of the present disclosure;
FIG. 3 is a block diagram showing a configuration of the electronic apparatus according to an embodiment of the present disclosure;
FIG. 4 is a block diagram showing a configuration of a terminal device according to an embodiment of the present disclosure;
FIG. 5 is a sequence diagram for describing an authentication process according to an embodiment of the present disclosure;
FIG. 6 is a diagram for describing an operation in response to an authentication request from another terminal device according to an embodiment of the present disclosure;
FIG. 7 is a diagram for describing a screen display operation according to an embodiment of the present disclosure;
FIG. 8 is a diagram showing an example of a guidance user interface (UI) that may be displayed on the terminal device according to an embodiment of the present disclosure;
FIG. 9 is a diagram showing an example of a guidance UI that may be displayed on the terminal device according to an embodiment of the present disclosure;
FIG. 10 is a flowchart for describing a controlling method of an electronic apparatus according to an embodiment of the present disclosure; and,
FIG. 11 is a flowchart for describing a controlling method of a terminal device according to an embodiment of the present disclosure.

### [Mode for Invention]

The present disclosure may be variously modified and have several embodiments, and specific embodiments of the present disclosure are thus illustrated in the accompanying drawings and described in detail in this specification. However, it should be understood that the scope of the present disclosure are not limited to specific embodiments, and include all modifications, equivalents, and alternatives according to an embodiment of the present disclosure. Throughout the accompanying drawings, similar components are denoted by similar reference numerals.

In describing the present disclosure, omitted is a detailed description of a case where it is decided that a detailed description of the known functions or configurations related to the present disclosure may unnecessarily obscure the gist of the present disclosure.

In addition, the following embodiment may be modified in several different forms, and the scope and spirit of the present disclosure are not limited to the following embodiments. Rather, these embodiments make the present disclosure thorough and complete, and are provided to completely convey the spirit of the present disclosure to those skilled in the art.

Terms used in the present disclosure are used only to describe the specific embodiments rather than limit the scope of the present disclosure. A term of a singular number may include its plural number unless explicitly indicated otherwise in the context.

In the present disclosure, the expression such as "have", "may have", "include", or "may include", indicates the presence of a corresponding feature (for example, a numerical value, a function, an operation, or a component such as a part), and does not exclude the presence of an additional feature.

In the present disclosure, the expression such as "A or B", "least one of A and/or B", or "one or more of A and/or B" may include all possible combinations of items enumerated together. For example, "A or B", "at least one of A and B", or "at least one of A or B" may indicate all of 1) a case in which at least one A is included, 2) a case in which at least one B is included, or 3) a case in which both of at least one A and at least one B are included.

The expressions such as "first" and "second", used in the present disclosure, may indicate various components regardless of the sequence and/or importance of the components. These expressions are only used to distinguish one component and another component from each other, and do not limit the corresponding components.

If any component (for example, a first component) is mentioned to be "(operatively or communicatively) coupled with/to" or "connected to" another component (for example, a second component), it should be understood that the any component is directly coupled to another component or may be coupled to another component through yet another component (for example, a third component).

On the other hand, if any component (for example, the first component) is mentioned to be "directly coupled with/to" or "directly connected to" another component (for example, the second component), it should be understood that yet another component (for example, the third component) is not present between any component and another component.

An expression such as "configured (or set) to", used in the present disclosure, may be replaced by an expression such as "suitable for", "having the capacity to", "designed to", "adapted to", "made to", or "capable of", depending on a context. The expression "configured (or set) to" does not necessarily indicate "specifically designed to" in terms of hardware.

Instead, the expression "a device configured to", in any context, may indicate that the device may "perform~" together with another device or component. For example, a "processor configured (or set) to perform A, B, and C" may indicate a dedicated processor (for example, an embedded processor) that may perform the corresponding operations or a general-purpose processor (for example, a central processing unit (CPU) or an application processor) that may perform the corresponding operations by executing one or more software programs stored in a memory device.

In the embodiments, a "module" or a "part" may perform at least one function or operation, and be implemented by hardware or software or be implemented by a combination of hardware and software. In addition, a plurality of "modules" or a plurality of "parts" may be integrated in at least one module and be implemented by the processor 130 except for a "module" or a "part" that needs to be implemented by specific hardware.

Operations performed by the modules, the programs, or other components according to various embodiments may be executed in a sequential manner, a parallel manner, an iterative manner, or a heuristic manner, at least some of the operations may be performed in a different order or be omitted, or other operations may be added.

Meanwhile, the various elements and areas in the drawings are schematically shown. Therefore, the spirit of the present disclosure is not limited by relative sizes or intervals shown in the accompanying drawings.

Meanwhile, an electronic apparatus according to the various embodiments of the present disclosure may include, for example, at least one of a smartphone, a tablet personal computer (PC), a desktop PC, a laptop PC, or a wearable device. The wearable device may include at least one of an accessory-type wearable device (for example, a watch, a ring, a bracelet, an anklet, a necklace, glasses, contact lenses, or a head-mounted device (HMD)), a textile or clothing-integrated wearable device (for example, an electronic clothing), a body-attached wearable device (for example, a skin pad or a tattoo), or a biologically implantable circuit.

In some embodiments, the electronic apparatus may include, for example, at least one of a television, a digital video disk (DVD) player, an audio, a refrigerator, an air conditioner, a vacuum cleaner, an oven, a microwave oven, a washing machine, an air purifier, a set-top box, a home automation control panel, a security control panel, a media box (e.g., Samsung HomeSync^{™}, AppleTV^{™}, or Google TV^{™}), a game console (e.g., Xbox^{™} or PlayStation^{™}), an electronic dictionary, an electronic key, a camcorder, or an electronic picture frame. Meanwhile, among the electronic apparatus described above, a device including a display may be referred to as a display device. Meanwhile, the electronic apparatus according to the present disclosure may be a set-top box or a PC that provides an image to the display device even without the display.

In addition, among the electronic apparatuses described above, an apparatus carriable by the user may be referred to as a terminal device. For example, the terminal device may be a smartphone, a tablet, a laptop, or the like.

Hereinafter, an embodiment of the present disclosure is described in detail with reference to the accompanying drawings so that those skilled in the art to which the present disclosure pertains may easily practice the present disclosure.

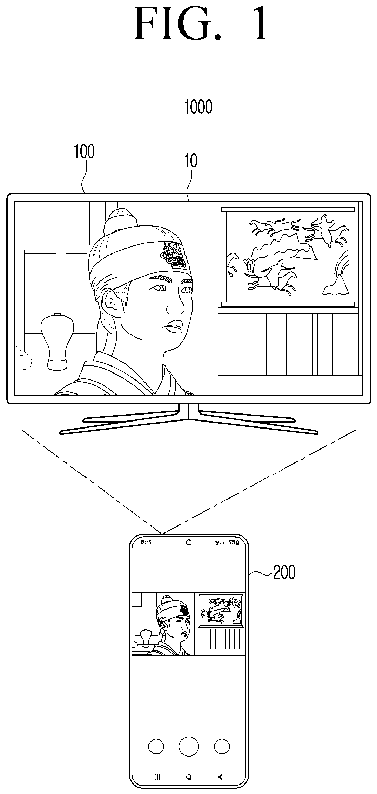

FIG. 1 is a diagram for describing an authentication operation in an electronic system according to an embodiment of the present disclosure.

Referring to FIG. 1, an electronic system 1000 may include an electronic apparatus 100 and a terminal device 200. In the illustrated example, the electronic system 1000 is shown as including one electronic apparatus 100 and one terminal device 200. However, in implementation, the electronic system 1000 may include a plurality of electronic apparatuses 100 and a plurality of terminal devices 200.

The electronic apparatus 100 may display an image 10 corresponding to content. Here, the content may include an image, audio, or a combination thereof, and include information that may be provided visually, audibly, or audiovisually to a user through the electronic apparatus.

For example, content may be provided through the electronic apparatus as a movie, music, play, photo, cartoon, animation, computer game, text, shape, color, voice, operation or picture, or a combination thereof, and may include game content, voice content, music content, image content, video content, widget content, web pages, or the like.

In addition, the image may include various types of visual information. For example, the image may include a still image and a moving image (or video). For example, the video may include the various types of visual information that represents a movement of an object by using a plurality of continuous still images.

For example, the image may include a landscape image whose width is longer than its height (e.g., a landscape image or a horizontal image), a portrait image whose height is longer than its width (e.g., a portrait image or a vertical image), or the like, based on an aspect ratio. For example, the landscape image may include an image having a ratio of 16:9, and a portrait image may include an image having a ratio of 9:16. The specific numbers are provided as examples for convenience of description and are not limited thereto.

For example, the image may include various resolutions based on the number of pixels (the product of the number of pixels in a horizontal direction and the number of pixels in a vertical direction) included in the image. For example, the image may include a high-resolution image (such as full high-definition (FHD, 1920×1080 pixels) or 8K (7680×4320 pixels)), a low-resolution image (such as 640×480 pixels), or the like based on the resolution.

In an example of the present disclosure, each of the plurality of still images included in the video may indicate a frame (or an image frame).

In an example, the video may include a plurality of frames, and each of the plurality of frames may correspond to one screen output by the electronic apparatus. In an example, the number of frames (or the number of screens) output per second by the electronic apparatus may be referred to as a frame rate, and the frame rate may be expressed in units of frames per second (fps) or Hertz (Hz). In an example, video having 60 fps may indicate video including 60 frames in 1,000 millisecond (ms).

Meanwhile, in the illustrated example, for ease of description, it is assumed that the electronic apparatus directly displays an image. However, in implementation, the electronic apparatus may be an apparatus that outputs an image without including a display.

A remote control device is conventionally used to control the electronic apparatus 100. Recently, the user terminal device 200 may be used as the remote control device. For example, if the user terminal device 200 is authenticated, the terminal device 200 may display a user interface window for controlling the electronic apparatus 100. The user may perform various manipulations such as changing channels, changing sources, and adjusting volume through the displayed user interface window.

Here, authentication is a process for confirming the identity of someone or something. The authentication may be performed by verifying a password, hardware token, or information that proves the identity.

In this way, the terminal device 200 needs to perform an authentication procedure to control the electronic apparatus 100. In detail, only a person having control authority for the electronic apparatus 100 is required to be able to manipulate the electronic apparatus 100. For example, a wireless communication method may receive a signal even from the next door. Accordingly, the authentication procedure is necessary because a user in the next door may attempt to access the electronic apparatus.

For the authentication, a quick response (QR) code or a personal identification number (PIN) code may be conventionally displayed on the screen. For example, if the QR code is displayed, the terminal device 200 may capture the QR code, obtain information from the captured QR code, and perform the authentication with the electronic apparatus by using the obtained information.

If the PIN code is displayed on the screen, the user may input the PIN code into the terminal device 200, and the terminal device 200 may perform the authentication procedure on the electronic apparatus 100 by using the input PIN code.

Such an authentication process may interfere with a viewer's enjoyment of the screen, as the QR code or the PIN code needs to be displayed on the screen.

The present disclosure provides a method for performing the authentication without interfering with the user's viewing to address this issue. According to the disclosure, the electronic apparatus 100 stores image information corresponding to the content if the authentication process is performed. Additionally or alternatively, the electronic apparatus 100 may store audio information corresponding to the content if the authentication process is performed. In this case, the electronic apparatus 100 may also maintain the same image display and audio output for the content. In other words, the electronic apparatus 100 may include a display device, wherein the display device displays the image based on which the authentication process is performed.

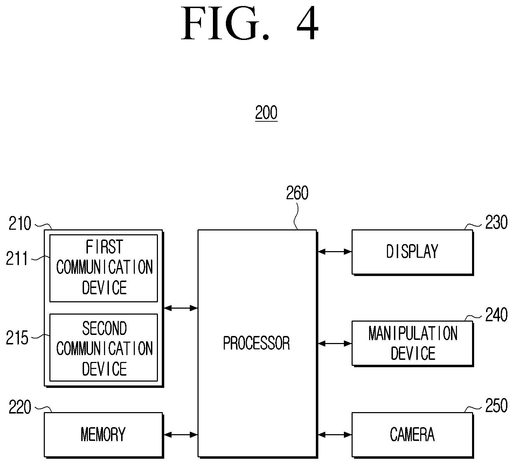

In this state, the terminal device 200 may capture, e.g. via its camera, the image 10 currently displayed on the display device of the electronic apparatus 100. In addition, the terminal device 200 transmits the captured image to the electronic apparatus 100 as authentication information. The specific configuration and operation of the terminal device 200 are described below with reference to FIG. 4.

The electronic apparatus 100 may perform a mutual comparison between received capture data and pre-stored image information to determine whether the user captures the screen displayed on the electronic apparatus 100, and perform the user authentication. In other words, the electronic apparatus 100 may compare the stored image information with the captured image information received from the terminal and, if they correspond, authenticate the terminal device. For example, as illustrated in the drawing, if the image transmitted from the terminal device 200 is one of the displayed screens, the terminal device may be authenticated as the user terminal device that may control the electronic apparatus.

The image may be an image of an application screen, a system UI and/or a broadcast that is currently displayed on the electronic device 100. The image may contain unique visual elements that can be identified by the authentication process. No QR code or similar optically encoded data is displayed or required. That is, unlike conventional authentication methods that display a QR code on the TV screen for scanning by a terminal device, the present disclosure utilizes screen image capture without QR code generation or display. The authentication interface presented on the TV is intended for visual identification and analysis by a terminal device based on screen content itself, not based on machine-readable codes.

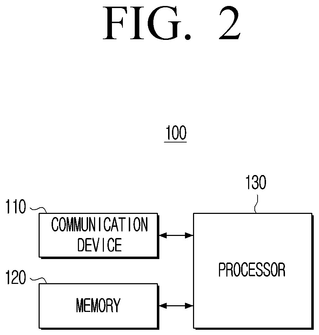

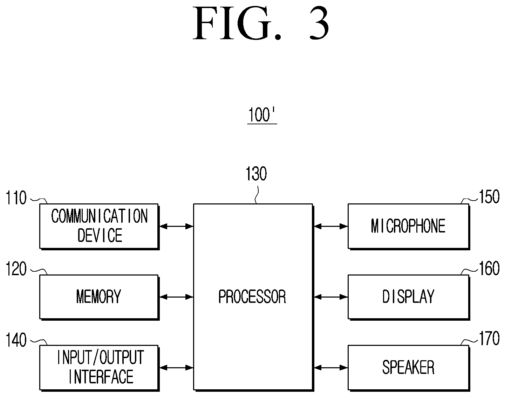

However, if the image that the user currently views is a terrestrial broadcast, and many viewers may view the same image, the electronic apparatus 100 may perform the authentication procedure by using various additional information as well as the image comparison. These various authentication methods are described below. The specific configuration and operation of the electronic apparatus 100 are described below with reference to FIGS. 2 and 3.

In the illustrated example, the electronic apparatus is shown to directly display the image. However, in implementation, the electronic apparatus may be an apparatus that performs only the image generation operation as described above and provides the generated image to a separate display.

As described above, the electronic apparatus according to the present disclosure may continuously output the conventional screen during the authentication process, thus performing the authentication operation without interfering with the user's viewing.

FIG. 2 is a block diagram showing a configuration of the electronic apparatus according to an embodiment of the present disclosure.

Referring to FIG. 2, the electronic apparatus 100 may include a communication device 110, a memory 120, and a processor 130.

The communication device 110 is a component for performing communication with various types of external devices by using various types of communication methods. The communication device 110 may include a wireless fidelity (Wi-Fi) module, a Bluetooth module, an infrared communication module, a wireless communication module, or the like. Here, each communication module may include at least one hardware chip or hardware circuit.

The Wi-Fi module and Bluetooth module may perform the communication in a Wi-Fi manner and a Bluetooth manner, respectively. In case of using the Wi-Fi module or the Bluetooth module, the communication device 110 may first transmit and receive various connection information such as a service set identifier (SSID) or a session key, and connect the communication based on this connection information, and then transmit and receive various information.

The infrared communication module may perform the communication based on infrared data association (IrDA) technology that wirelessly transmits data in a short distance using an infrared ray between visible and millimeter waves.

In addition to the above-described communication methods, the wireless communication module may include at least one communication chip performing the communication based on various wireless communication standards such as Zigbee, third generation (3G), third generation partnership project (3GPP), long term evolution (LTE), LTE advanced (LTE-A), fourth generation (4G), and fifth generation (5G).

In addition, the communication device 110 may include at least one of a local area network (LAN) module, an Ethernet module, or a wired communication module that performs the communication by using a pair cable, a coaxial cable, an optical fiber cable, or an ultrawideband (UWB) module.

In an example, the communication device 110 may use the same communication module (e.g., the Wi-Fi module) to communicate with the external device, such as a remote control, and an external server.

In another example, the communication device 110 may use a different communication module (e.g., the Wi-Fi module) to communicate with the external device, such as the remote control, and the external server. For example, the communication device 110 may use at least one of the Ethernet module or the Wi-Fi module to communicate with the external server, and may use the Bluetooth module to communicate with the external device such as the remote control device. However, this case is only an embodiment, and the communication device 110 may use at least one communication module among various communication modules in case of communicating with the plurality of external devices or external servers.

The communication device 110 may receive the content. The content may be a variety of content, such as a movie, a music video, a drama, or a short image. In addition, the content is assumed to be video. However, the content may also be an image or be referred to as video.

The communication device 110 may communicate with the terminal device. Here, the communication device 110 may communicate with the terminal device in a P2P manner. Here, the P2P communication is a method of performing direct connection without using another relay device such as a router, and may be Bluetooth low energy (BLE), Wi-Fi Direct, or the like.

If the communication device 110 establishes a wireless connection with the terminal device 200, the communication device 110 may measure a wireless signal strength, measure latency, or transmit and receive information necessary for the authentication for the authentication process described below. During this process, the communication device 110 may generate information corresponding to the latency.

The communication device 110 may provide the user interface window for controlling the electronic apparatus (or data that enables outputting the user interface window) to the terminal device if the authentication procedure is completed, or may receive a control command from the terminal device. For example, the above-described data may be address information that enables obtaining the user interface window, an index (for example, a UI number to be used if the terminal device already has a plurality of user interface windows), or the like.

In addition, the communication device 110 may receive, from the external device, not only the content but also information or the like necessary for providing various applications and services of the electronic apparatus 100.

The memory 120 may be implemented as an internal memory, such as a read only memory (ROM) (for example, an electrically erasable programmable read-only memory (EEPROM)), a random access memory (RAM), or the like, included in the processor 130, or may be implemented as a memory separate from the processor 130. In this case, the memory 120 may be implemented as a memory embedded in the electronic apparatus 100 or as a memory detachable from the electronic apparatus 100, depending on a purpose of data storage. For example, data for operating the electronic apparatus 100 may be stored in the memory embedded in the electronic apparatus 100, and data for an expanded function of the electronic apparatus 100 may be stored in the memory detachable from the electronic apparatus 100.

The memory 120 may store the image information and/or the audio information for the authentication described below. Here, the audio information may be audio content (or sound source) itself corresponding to the image, and may be the characteristics (e.g., frequency characteristics) of the audio content. In addition, the memory 120 may temporarily store information (e.g., the capture information) received from the terminal device 200 through the communication device 110.

The memory 120 may store an audio signal and/or a screen change pattern having a predetermined pattern used for the authentication process or the like.

In addition, the memory 120 may store various content (e.g., broadcast content and applications) received through the communication device 110 described above.

In addition, the memory 120 may store at least one instruction for operating the electronic apparatus 100. Here, the instructions may include an instruction for displaying an image, an instruction for performing the authentication process for the terminal device, or the like.

The memory embedded in the electronic apparatus 100 may be implemented as at least one of a volatile memory (e.g., a dynamic RAM (DRAM)), a static RAM (SRAM), or a synchronous dynamic RAM (SDRAM)) or a non-volatile memory (e.g., a one time programmable ROM (OTPROM), a programmable ROM (PROM), an erasable and programmable ROM (EPROM), an electrically erasable and programmable ROM (EEPROM), a mask ROM, a flash ROM, a flash memory (e.g., a NAND flash or a NOR flash), a hard drive, or a solid state drive (SSD)), and the memory detachable from the electronic apparatus 100 may be implemented as a memory card (e.g., a compact flash (CF), a secure digital (SD), a micro secure digital (Micro-SD), a mini secure digital (Mini-SD), an extreme digital (xD), or a multi-media card (MMC)) or an external memory that may be connected to a universal serial bus (USB) port (e.g., a USB memory).

Meanwhile, in the illustrated example, the electronic apparatus 100 is shown as including one memory. However, if the memory is referred to as being classified into the volatile memory and the nonvolatile memory, the electronic apparatus 100 may also be referred to as including a plurality of memories.

The processor 130 may control overall operations of the electronic apparatus 100. In detail, the processor 130 may be connected to the components of the electronic apparatus including the communication device 110 and the memory 120, and may control the overall operations of the electronic apparatus by executing at least one instruction stored in the memory 120 as described above. In particular, the processor 130 may be implemented not only as one processor but also as a plurality of processors.

The processor 130 may be implemented as at least one integrated circuit (IC, or circuitry) chip and may process various data. The processor 130 may include at least one electrical circuit and may individually or collectively distribute and process the instructions (or programs, data, or the like) stored in the memory.

The processor 130 may include a set of processors including at least one processing circuit. The processor 130 may include any processing circuit operative to control the performance and operations of at least one component (e.g., the memory and/or a driving device (sensor)) included in the electronic apparatus. For example, the processor 130 (e.g., an access point (AP)) may be implemented as a system on chip (SoC) (e.g., a single chip or a chipset). For example, the processor 130 may be implemented as multiple cores (or at least one core circuit), multiple chips, or multiple chipsets.

For example, the processor 130 may include at least one processing circuit. In addition, the processor 130 may include at least one processing circuit for individually and/or collectively performing various functions in the present disclosure. As a non-limiting example, at least a portion of the processor 130 may be included in a first chip of the electronic apparatus 100, and at least another portion of the processor 130 may be included in a second chip of the electronic apparatus that is different from the first chip of the electronic apparatus 100.

For example, the processor 130 may include a central processing unit (CPU), a graphics processing unit (GPU), a neural processing unit (NPU), an image signal processor (ISP), a display controller, a memory controller, a storage controller, a communication processor (CP), and/or a sensor interface. These components of the processor 130 are merely provided as examples. The processor 130 may further include other components in addition to the above-described components. In addition, some components of the processor 130 may be omitted. In addition, some components of the processor 130 may be included as separate components of the electronic apparatus 100 disposed outside the processor 130. For example, some components of the processor 130 (e.g., the memory controller) may be included within other components (e.g., at least a portion of the memory, the interface (e.g., available for connection to at least one component of the electronic apparatus 100), and the display).

The processor 130 may cause other components of the electronic apparatus 100 to perform various operations by executing instructions stored in the memory 120. The processor 130 may process setting values, function instructions, or the like based on a pre-stored control program or control data, and output a control signal related to a function that the electronic apparatus 100 may perform or a communication signal for communication with an external electronic apparatus.

The processor 130 may obtain the content by using the communication device 110. For example, if the processor 130 receives a playback command for a specific content from the user, the processor 130 may obtain the content by controlling the communication device 110 to receive the content. The content may be video such as video on demand (VOD). However, the content may be a real-time streaming image provided by a specific server, or may be a broadcast content transmitted by a broadcasting station.

The processor 130 may generate an image corresponding to the obtained content. For example, if the content is real-time streaming, the processor 130 may configure a screen by using image data from the received streaming data, and generate the image by using the screen.

The processor 130 may output the generated image. For example, if the electronic apparatus includes the display, the processor 130 may control the display to display the generated image. If the electronic apparatus is a set-top device, the processor 130 may output the generated image to the display device.

In addition, the processor 130 may generate the audio signal corresponding to the obtained content. In addition, the processor 130 may output the generated audio signal. For example, if the electronic apparatus includes a speaker, the processor 130 may control the speaker to output the audio signal. If the speaker is included in the external device, the processor 130 may control the communication device 110 to transmit the audio signal to the external device.

The processor 130 may control the communication device 110 to establish the wireless connection with the terminal device. For example, if the terminal device requests the wireless connection establishment, the processor 130 may control the communication device 110 to establish the wireless connection with the terminal device.

The processor 130 may determine whether the terminal device 200 connected thereto in a wireless manner is the authenticated device or not. If the terminal device 200 is an authenticated device, the processor 130 may allow an operation to receive the control command from the terminal device 200.

Conversely, if the terminal device 200 is not the authenticated device, the processor 130 may determine that the terminal device 200 requires the authentication process. In addition, the processor 130 may measure the wireless signal strength from the terminal device 200. The wireless signal strength may be used to determine a data type described below.

In addition, the processor 130 may measure the latency from the terminal device 200. Here, the latency indicates a time between a stimulus and a response, and may be a time from when the electronic apparatus transmits a request to the terminal device until when the electronic apparatus performs an operation in response to the request, or conversely, when the electronic apparatus performs a specific operation in response to the request from the terminal device. In the present disclosure, the latency is used to determine a time relationship between the capture (or storage) of an image performed by the electronic apparatus and the image capture performed by the terminal device.

The processor 130 may determine the data type to be used for the authentication, and perform a storage operation based on the determined type. For example, the data type may include image, audio, the image and the audio, the image and device characteristics, or the image and a brightness change pattern.

For example, the processor 130 may determine the data type based on an image type and a degree of change in the image. For example, if the user views the terrestrial broadcast that may be easily obtained by other users, the processor 130 may determine to use audio together with the image, to use information about the display device together with the image, to output a screen brightness pattern together with the image, or to output an audio signal in an inaudible frequency band together with the image.

Here, an inaudible frequency is the opposite of an audible frequency, that is, a frequency outside a range of frequencies that a person's ears may hear (16 to 20,000 Hz). For example, the inaudible frequency may refer to a frequency greater than or equal to 200,000 Hz.

Here, the processor 130 may determine the data type by using information other than the image if the image currently output is a static image having little change.

For example, in a state where the terminal device and the electronic apparatus are expected to be located within 1 m of each other and have very good reception strength, the processor 130 may determine to perform the authentication by using only the image, even while a normal broadcast image is displayed. Conversely, if the wireless signal is expected to be somewhat distant, such as passing through a wall, the processor 130 may use another method, rather than using only the image.

If the user views an image that is not easy for other users to obtain, the processor 130 may determine to use only the image.

Hereinabove, a process for determining the data type is described in a fragmentary manner. However, in implementation, the processor 130 may comprehensively consider and use the above-described matters. For example, the processor 130 may assign a predetermined score to each matter and determine a method corresponding to the summed score.

In addition, the processor 130 may control the communication device 110 to transmit information about the determined data type to the terminal device. Here, the processor 130 may also transmit information about a capture method to the terminal device. For example, if the information about the display device is also used, the processor 130 may control the communication device 110 to provide guide information indicating that an entire appearance of the display device needs to be captured.

Alternatively, if the audio signal is used, the audio signal may also be cited in the authentication, and the processor 130 may thus control the communication device 110 to provide a guidance message to perform the capture at a nearby location if possible.

In addition, the processor 130 may store information corresponding to the determined data type if the data type is determined. For example, the processor 130 may store an image (or a frame) corresponding to the image in a predetermined interval unit, or store all frames within a predetermined time interval. Here, the processor 130 may use latency information measured previously. That is, the processor 130 may notify the terminal device of information about the data type, and perform the data storage operation after the latency after the notification.

If it is determined to use the audio, the processor 130 may store the audio information in the memory 120.

In addition, if it is determined to use a predetermined brightness pattern, the processor 130 may store a brightness change pattern applied to the image. In addition, the processor 130 may correct a screen brightness to correspond to the above-described brightness change pattern and output a corrected image.

Meanwhile, in implementation, the electronic apparatus may pre-store a plurality of brightness change patterns, and if it is determined to use the brightness pattern, the electronic apparatus may select and use one of pre-stored brightness change patterns.

In addition, if sound in the inaudible frequency band is used, the processor 130 may store the used sound information in the memory 120. The sound information may be the sound source itself using the inaudible frequency band, or information about a frequency characteristic of the sound source.

In addition, if it is determined to use the device information about the display device, the processor 130 may obtain the device information about the display device. The processor 130 may obtain and store the device information about the display device in advance. If the information about the display device is unable to be obtained, the processor 130 may exclude using the device information about the display device in a prior data type determination process.

Here, the device information about the display device may include a screen size, manufacturer information, model name, or the like. If the electronic apparatus is the display device that includes a display, the processor 130 may obtain all the above-described information. If the electronic apparatus is the set-top box that includes no display, the processor 130 may utilize information previously input by the user or information obtained from the display device.

If a captured image is received, the processor 130 may determine legitimacy of the received captured image. For example, the processor 130 may request the terminal device to re-capture and transmit the image if the screen is not identified in the captured image, if the display device is captured in such a way that the display device is not identified in the captured image although it is determined to use the device information about the display device, or if an image quality of the captured image is not legitimacy for use in the authentication process.

If the captured image is received, the processor 130 may perform the authentication process corresponding to the determined data type. For example, if the determined data type is determined to use only the image, the processor 130 may perform a function corresponding to the authentication based on the pre-stored image information and the received data. For example, the processor 130 may obtain the image by using the received data, and perform the authentication (or the function corresponding to the authentication) by determining whether the obtained image matches one of the pre-stored images. The processor 130 may consider event information related to camera capture and the latency information notified by the terminal device during a process of selecting an image to be used for the authentication.

Such image comparison may be performed by comparing whether two images include the same object, by performing color correction on one of the two images to determine whether the corrected image and the other image include the same color pattern, or the like.

In addition, the processor 130 may use a learning model for the comparison. For example, the processor 130 may input two images into the learning model and determine whether the images are the same image based on a comparison result of the learning model. Here, the learning model may be a model that receives two images and determines whether the two images are the same. Here, the input image may be the input or obtained image as it is, or may be an image preprocessed to have a predetermined size.

If it is determined to use the screen change pattern, the processor 130 may determine the brightness of the received captured image in a frame unit or a predetermined time unit, and perform the authentication by determining whether a brightness change has the pre-stored brightness change pattern.

In addition, if the determined data type is determined to also use the audio information, the processor 130 may extract the audio information from the received image and compare the extracted audio information with the pre-stored audio to determine whether the information match.

Such audio comparison may involve performing a mutual comparison between frequency components in a corresponding region at each predetermined time interval to determine whether the components have the same ratio, or performing speech recognition on each audio and determining whether the same text is detected to determine whether the audios match.

Here, in determining whether the audios match, the processor 130 may not only use whether similar sound patterns match, but also consider whether a volume of the audio is greater than or equal to a predetermined level.

In addition, to compare whether the audios match, the processor 130 may perform a comparison operation by using only mid- and high-band frequencies among various frequency bands included in the audio, or by applying a weight to the high-band frequencies.

Meanwhile, if an inaudible frequency pattern is added to the audio signal, the processor 130 may determine whether a corresponding inaudible frequency band pattern is included in the audio signal.

The processor 130 may obtain characteristic information including at least one of a display screen size or model information in the captured image based on the captured image, and may perform the authentication by comparing the characteristic information with the device information as well as whether the captured image and the image information match.

Meanwhile, the authentication is described above as being performed by comparing the above-described information. However, in addition to the authentication operation described above, the processor 130 may also perform an additional operation related to the authentication. That is, the expression of performing the above-described authentication may include not only the authentication or authority operation that allows the terminal device to control the display, but also an operation of providing the terminal device with the user interface window for the display control or the data for displaying the user interface window, or the like.

As described above, the electronic apparatus according to the present disclosure may perform the authentication procedure without any modification to the screen displayed on the display, and thus perform the authentication procedure without interfering with the view.

Meanwhile, only the brief configuration included in the electronic apparatus 100 is shown and described above. However, in implementation, various additional configurations may be provided. These configurations are described below with reference to FIG. 3.

FIG. 3 is a block diagram showing a configuration of the electronic apparatus according to an embodiment of the present disclosure.

Referring to FIG. 3, an electronic apparatus 100' may include the communication device 110, the memory 120, the processor 130, an input/output interface 140, a microphone 150, a display 160, and a speaker 170.

The configurations of the communication device 110, the memory 120, and the processor 130 are described above with reference to FIG. 2, and only operations different from FIG. 2 are described below.

The input/output interface 140 may be any one of a high definition multimedia interface (HDMI), a mobile high-definition link (MHL), a universal serial bus (USB), a DisplayPort (DP), Thunderbolt, a video graphics array (VGA) port, a red-green-blue (RGB) port, a D-subminiature (D-SUB), or a digital visual interface (DVI).

The input/output interface 140 may input/output at least one of audio or video signals. According to an implementation example, the input/output interface 140 may include a port for inputting and outputting only the audio signal and a port for inputting and outputting only the video signal as its separate ports, or may be implemented as a single port for inputting and outputting both the audio signal and the video signal.

In addition, the input/output interface 140 may provide a video signal corresponding to a screen generated by the electronic apparatus 100' or an audio signal together with the video signal to the external device (e.g., the display device, or the set-top box (STB)).

The microphone 150 may receive the user voice while activated. For example, the microphone 150 may be integrated with the upper, front, side, or the like of the electronic apparatus 100'. The microphone 150 may include various components such as a microphone collecting the user voice in an analog form, an amplifier circuit amplifying the collected user voice, an analog to digital (A/D) conversion circuit sampling the amplified user voice and converting the same into the digital signal, a filter circuit removing a noise component from the converted digital signal, and the like.

If the user voice is input through the microphone 150, the processor 130 may check content of the user voice and perform an operation corresponding to the voice content. For example, the voice content here may be a request for controlling the electronic apparatus 100 (e.g., changing the source or adjusting the volume).

Meanwhile, although the user voice is described above as being input through the microphone 150, the microphone may be provided on a remote control for controlling the electronic apparatus 100', and the user voice input through the microphone provided on the remote control may be obtained from the terminal device 200 through the communication device 110 described above and transmitted to the electronic apparatus 100' for processing.

The electronic apparatus 100' may be operated not only based on the configuration provided in the electronic apparatus 100' or the remote control, but also operated according to the control command from the terminal device 200. For example, if the electronic apparatus is a television (TV) or a set-top box, manufacturers may recently provide applications for controlling the TV or the set-top box. Such applications may provide a function that allows the terminal device to be used as a remote control for the electronic apparatus.

Accordingly, if the user executes an application to control the TV or the set-top box by using the terminal device and inputs a voice command through the terminal device, the electronic apparatus 100' may perform a voice recognition operation and a corresponding voice recognition result by using a voice signal input through the terminal device. Meanwhile, the electronic apparatus 100' may perform this operation after the authentication for the terminal device 200 is performed as described above.

The display 160 may be implemented as any of various types of displays such as a liquid crystal display (LCD), an organic light-emitting diode (OLED) display, or a plasma display panel (PDP). The display 160 may also include a driving circuit, a backlight unit, and the like, which may be implemented in a form such as an a-si thin film transistor (TFT), a low temperature poly silicon (LTPS) TFT, or an organic TFT (OTFT). Meanwhile, the display 160 may be implemented as a touchscreen combined with a touch sensor, a flexible display, a three-dimensional (3D) display, or the like.

The display 160 may display various images. For example, the display 160 may display the image generated by the processor 130.

The speaker 170 may output sound. In detail, the speaker 170 may be a component for outputting various audio data processed through the input/output interface as well as various notification sounds or voice messages.

In addition, the speaker 170 may output an inaudible audio pattern in the authentication process. Here, the inaudible frequency band may be an ultrasonic band and may use any band that is unable to be detected by a person.

Meanwhile, the electronic apparatus 100 is described as including the display 160 with reference to FIG. 3. However, if the electronic apparatus 100' is a device such as the set-top box that includes no display, the electronic apparatus 100' may omit a configuration of the display. In addition, based on an implementation type, the electronic apparatus 100' may also omit the speaker or the microphone described above. In addition, although not shown in FIG. 3, the electronic apparatus 100' may also further include another component (e.g., a camera or a human body detection sensor).

FIG. 4 is a block diagram showing a configuration of the terminal device according to an embodiment of the present disclosure.

Referring to FIG. 4, the terminal device 200 may include a communication device 210, a memory 220, a display 230, a manipulation device 240, a camera 250, and a processor 260.

The communication device 210 is a component for performing communication with various types of external devices by using various types of communication methods. The communication device 210 may include a first communication device 211 and a second communication device 215.

The first communication device 211 refers to a device that performs communication with an access point and may use a Wi-Fi module. The communication device 211 may establish a wireless connection with the access point. Through this operation, the communication device 211 may determine channel information of the access point.

The second communication device 215 refers to a device that performs two-way communication with another electronic apparatus, and may include at least one communication chip that performs the communication according to various wireless communication standards such as a Bluetooth module, Zigbee, third generation (3G), third generation partnership project (3GPP), long term evolution (LTE), LTE advanced (LTE-A), fourth generation (4G), and fifth generation (5G).

The second communication device 215 may perform a wireless connection with the electronic apparatus 100. If the second communication device 215 establishes the wireless connection with the electronic apparatus 100, the second communication device 215 may measure a wireless signal strength, measure latency, or transmit and receive various data for the authentication.

In addition, if the authentication is completed, the second communication device 215 may receive the user interface window for controlling the electronic apparatus 100 and transmit the control command for controlling the electronic apparatus 100. In addition, the second communication device 215 may obtain the user voice command for controlling the electronic apparatus 100 and transmit the same to the electronic apparatus 100.

The communication device 210 may further include a wired communication module that performs the communication by using a local area network (LAN) module, an Ethernet module, a pair cable, a coaxial cable, an optical fiber cable, an ultrawideband (UWB) module, or the like.

The memory 220 may store instructions, programs, or data for controlling the terminal device 200. Here, the instructions may include an instruction for performing the authentication procedure, an instruction for controlling the electronic apparatus, or the like.

For example, the memory 220 may be implemented as an internal memory, such as a read only memory (ROM) (for example, an electrically erasable programmable read-only memory (EEPROM)), a random access memory (RAM), or the like, included in the processor 260, or may be implemented as a memory separate from the processor 260. In this case, the memory 220 may be implemented as a memory embedded in the terminal device 200 or as a memory detachable from the terminal device 200, depending on a purpose of data storage. For example, data for operating the terminal device 200 may be stored in the memory embedded in the terminal device 200, and data for an expanded function of the terminal device 200 may be stored in the memory detachable from the terminal device 200. Meanwhile, the memory embedded in the terminal device 200 may be implemented as at least one of a volatile memory (e.g., a dynamic RAM (DRAM)), a static RAM (SRAM), or a synchronous dynamic RAM (SDRAM)) or a non-volatile memory (e.g., a one time programmable ROM (OTPROM), a programmable ROM (PROM), an erasable and programmable ROM (EPROM), an electrically erasable and programmable ROM (EEPROM), a mask ROM, a flash ROM, a flash memory (e.g., a NAND flash or a NOR flash), a hard drive, or a solid state drive (SSD)), and the memory detachable from the terminal device 200 may be implemented as a memory card (e.g., a compact flash (CF), a secure digital (SD), a micro secure digital (Micro-SD), a mini secure digital (Mini-SD), an extreme digital (xD), or a multi-media card (MMC)) or an external memory that may be connected to a universal serial bus (USB) port (e.g., a USB memory).

The memory 220 may temporarily store information obtained from the communication with the electronic apparatus 100, or temporarily store the captured image generated for the authentication described below.

In addition, the memory 220 may store various contents (e.g., broadcast contents or applications) received through the communication device 210 described below. For example, the application may be an application for remote control of the electronic apparatus 100.

Meanwhile, in the illustrated example, the terminal device 200 is shown as including one memory. However, if the memory is referred to as being classified into the volatile memory and the nonvolatile memory, the terminal device 200 may also be referred to as including a plurality of memories.

The display 230 may display the user interface window for selection of a function supported by the terminal device 200. In detail, the display 230 may display the user interface window for selection of various functions provided by the terminal device 200. The display 230 may be a monitor such as a liquid crystal display (LCD) or an organic light-emitting diode (OLED), and may also be implemented as a touchscreen capable of simultaneously performing some functions of the manipulation device 240 described below.

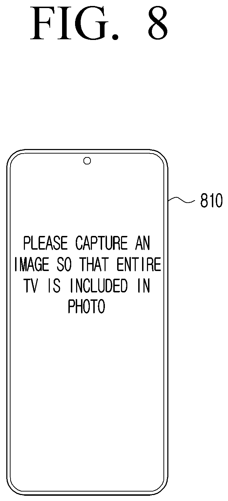

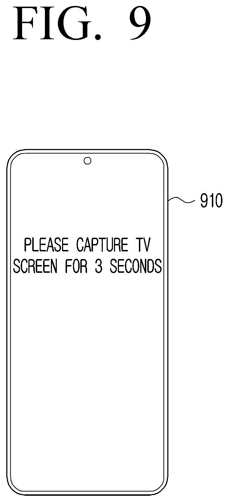

The display 230 may display the user interface window for remote control of the electronic apparatus 100. In addition, the display 230 may display information that the user needs to pay attention to during the capture in the authentication process. Examples of such information are described below with reference to FIGS. 8 and 9.

The manipulation device 240 may receive, from the user, function selection of the terminal device 200 and the control command for the corresponding function. The manipulation device 240 may be a keyboard, a mouse, a touch pad, or the like, and may also include the microphone for receiving the user voice.

The camera 250 may generate an image (or video) by a capture operation. For example, the camera 250 may generate a still image, generate the video by performing the capture continuously for a predetermined time, or generate a plurality of still images at the predetermined time interval.

The camera 250 may include a microphone and may obtain the audio signal by using the microphone included therein. Meanwhile, in implementation, a separate microphone may be used to obtain the audio signal.

The processor 260 may control overall operations of the terminal device 200. In detail, the processor 260 may be connected to the components of the terminal device including the communication device 210 and the memory 220, and may control the overall operations of the terminal device by executing at least one instruction stored in the memory 220 as described above. In particular, the processor 260 may be implemented not only as one processor but also as a plurality of processors.

The processor 260 may be implemented as at least one integrated circuit (IC, or circuitry) chip and may process various data. The processor 130 may include at least one electrical circuit and may individually or collectively distribute and process the instructions (or programs, data, or the like) stored in the memory.

The processor 260 may include a set of processors including at least one processing circuit. The processor 260 may include any processing circuit operative to control the performance and operations of at least one component (e.g., the memory and/or a driving device (sensor)) included in the terminal device. For example, the processor 260 (e.g., an access point (AP)) may be implemented as a system on chip (SoC) (e.g., a single chip or a chipset). For example, the processor 260 may be implemented as multiple cores (or at least one core circuit), multiple chips, or multiple chipsets.

For example, the processor 260 may include at least one processing circuit. In addition, the processor 260 may include at least one processing circuit for individually and/or collectively performing various functions in the present disclosure. As a non-limiting example, at least a portion of the processor 260 may be included in a first chip of the terminal device 200, and at least another portion of the processor 260 may be included in a second chip of the terminal device that is different from the first chip of the terminal device 200.

For example, the processor 260 may include a central processing unit (CPU), a graphics processing unit (GPU), a neural processing unit (NPU), an image signal processor (ISP), a display controller, a memory controller, a storage controller, a communication processor (CP), and/or a sensor interface. These components of the processor 260 are merely provided as examples. The processor 260 may further include other components in addition to the above-described components. In addition, some components of the processor 260 may be omitted. In addition, some components of the processor 260 may be included as separate components of the terminal device 200 disposed outside the processor 260. For example, some components of the processor 260 (e.g., the memory controller) may be included within other components (e.g., at least a portion of the memory, the interface (e.g., available for connection to at least one component of the terminal device 200), the display).

The processor 260 may cause other components of the terminal device 200 to perform various operations by executing instructions stored in the memory 120.

The processor 260 may process setting values, function instructions, or the like based on a pre-stored control program or control data, and output a control signal related to a function that the terminal device may perform or a communication signal for communication with the external electronic apparatus.

The processor 260 may control the communication device 210 to establish the wireless connection with the electronic apparatus. For example, the processor 260 may control the communication device 210 to request the electronic apparatus to establish the wireless connection. To this end, the processor 260 may identify connectable devices and control the display 230 to display the identified devices. In addition, if the processor 260 receives, from the user, whether to perform the authentication procedure on the indicated device, the processor 260 may perform the wireless connection establishment with the corresponding device.

The processor 260 may capture the content displayed on the display. For example, the processor 260 may receive the information about the data type (e.g., image, voice, or the image and the voice) to be used for the authentication from the electronic apparatus 100. In response, the processor 260 may capture only the image displayed on the display or capture a video in which the image and the voice are combined, based on the received data type.

Here, the processor 260 may capture one frame, that is, capture an image or a video. Alternatively, the processor 260 may capture an image at the predetermined time interval. If the data type is received, the processor 260 may perform the capture in a way corresponding to the received data type.

Here, the processor 260 may control the communication device 210 to transmit information about a capture time point to the electronic apparatus 100. The time point information may be information used for capturing or storing an image displayed on the display. Through this operation, the electronic apparatus may minimize information required for the authentication.

In addition, the processor 260 may perform the capture by using a predetermined setting. For example, the processor 260 may perform the capture by using the camera based on various settings, and may perform the capture based on the setting value that enables the image to have a resolution that may be used for image analysis performed by the electronic apparatus 100. In addition, for convenience of image analysis, the processor 260 may also perform image quality processing or the like on the captured image.

If the captured image is generated, the processor 260 may control the communication device 210 to transmit the generated captured image. For example, if the image is captured, the processor 260 may control the communication device 210 to transmit the captured image to the electronic apparatus 100. Meanwhile, although the capture operation and the transmission operation are described above as separate operations, in implementation, the above-described operations may be applied in a streaming manner.

That is, rather than terminating a scheduled capture to generate the content and then performing the transmission operation or the like, the processor 260 may transmit the generated image and/or audio signal to the electronic apparatus 100 at the predetermined frame unit or at the predetermined time interval.

In addition, if the authentication is performed using the transmitted captured image, the processor 260 may perform the authentication procedure in response to permission from the electronic apparatus 100. Accordingly, the processor 260 may control the display 230 to display the user interface window for controlling the electronic apparatus. In addition, if the control command is selected through the displayed user interface window, the processor 260 may control the communication device 210 to transmit the selected control command.

As described above, the terminal device according to the present disclosure may use the screen currently displayed on the display as it is rather than using the QR code or the PIN number that obscures the screen of the electronic apparatus, and thus perform the authentication without interfering with the user's viewing or other users' viewing.

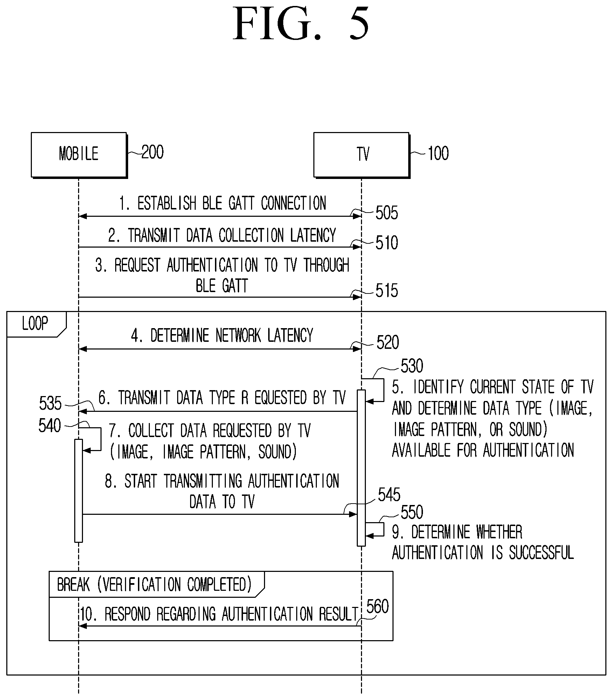

FIG. 5 is a sequence diagram for describing the authentication process according to an embodiment of the present disclosure.

FIG. 5 shows the electronic apparatus 100 and the terminal device 200.

The electronic apparatus 100 may establish the wireless connection with the terminal device 200 (505). The illustrated example assumes the BLE connection. However, in implementation, the electronic apparatus 100 may use a wireless connection other than BLE.

For example, the terminal device 200 may search for electronic apparatuses in vicinity and display a list of the electronic apparatuses found in the vicinity. The user may select an electronic apparatus to be connected among the found electronic apparatuses. In this case, the terminal device 200 may request the wireless connection establishment to the electronic apparatus selected by the user.

If such a wireless connection is established, the terminal device 200 may transmit latency information related to data collection to the electronic apparatus 100 (510).

The terminal device 200 may request the electronic apparatus 100 to perform the authentication (515). The electronic apparatus that receives the request for performing the authentication may determine the latency between the two devices (520). The latency may be used in the image storage and comparison processes described below.

In response to the authentication request, the electronic apparatus may determine the data type (530). For example, by considering the characteristics of the screen currently displayed on the electronic apparatus, the latency characteristics, the wireless signal strength between the terminal devices, or the like, the electronic apparatus may determine whether to use only the image, to use both the images and audio, to additionally include the brightness change pattern in the image, or to include a high-frequency signal in the sound.

For example, the electronic apparatus 100 may determine the data type (e.g., the image or the sound) by considering the characteristics of the content as shown in Table 1 below.

**[Table 1]**

| TV state | Requested data |
|---|---|
| No sound | Image |
| Static screen | Sound |
| Static screen & no sound | Capture the image at a specific location (e.g., randomly transmit a specific capture guide, such as a left corner of the TV or a right corner of the TV). |
| Static screen & severe sound noise | Use ultrasound. |
| Severe network latency | Image change pattern |

As shown in Table 1, the electronic apparatus 100 may determine suitability by giving a higher weight to the image data for a dynamic image having a lot of screen changes. Conversely, the electronic apparatus 100 may determine the suitability by giving a higher weight to voice data for the static image having little screen change.

Meanwhile, the electronic apparatus 100 may determine the suitability by giving a weight to the image data if the voice data is silent. If both images are the dynamic images and it is thus difficult to determine the suitability, the electronic apparatus 100 may perform the authentication by additionally using ultrasound or by converting the image into a predetermined pattern.

If the data type is determined based on this criterion, the electronic apparatus 100 may transmit the determined data type (535). Here, the electronic apparatus 100 may transmit a guidance message corresponding to the type to the terminal device 200. For example, if the information about the display device is used, the guidance message may indicate that an entire display appearance needs to be captured.

The terminal device 200 may obtain the image or the audio signal, by capturing the electronic apparatus in response to the received data type (540). For example, the terminal device 200 may obtain the image or the video by using the camera, and obtain the audio data by using the microphone.

Here, the terminal device 200 may obtain the data based on the transmitted type as shown in Table 2 below.

**[Table 2]**

| Data type requested from TV | Data collection method |
|---|---|
| Image type | Display a guide overlaid on the camera screen so that the user may easily capture the image. |
| Voice type | Display a text guide based on data condition so that the TV sound may be properly collected (e.g., "Come closer to the TV" or "Increase the TV sound"). |
| Specific location capture guide | Display a guide overlaid on the camera screen indicating a location requested by the TV. |

In response to the operation of the terminal device 200, the electronic apparatus 100 may store data based on the data type. The data may be referred to as comparison data or verification data. Here, the electronic apparatus 100 may store the image and sound displayed on the display, by considering the measured latency. For example, if the calculated latency is 500 ms, the electronic apparatus 100 may store the image and sound from 1 second earlier.

The terminal device 200 may transmit the captured image (e.g., the image and/or the audio information) to the electronic apparatus 100 (545). Here, the terminal device 200 may also transmit time information of the captured image. The time information may be absolute time information or may be a relative elapsed time from a time when the electronic apparatus 100 transmits the information of the data type.

If the electronic apparatus 100 receives the captured image, the electronic apparatus 100 may perform the authentication procedure based on the captured image and the pre-stored information (550). For example, if only the image is used, the electronic apparatus 100 may obtain a specific image from the captured image and determine whether the obtained image is included in the stored image. Such image comparison may be performed by extracting (or cropping) an image corresponding to the screen from the captured image and comparing the cropped image with the stored screen (or image).

If the audio is used together with the image, the electronic apparatus 100 may perform the authentication procedure by comparing the received audio data with the pre-stored data.

In addition, the electronic apparatus may transmit an authentication result to the terminal device 200 (560). For example, if the authentication is successful, a connection between the TV and the mobile device may be allowed. Otherwise, the access may be denied. Meanwhile, if the connection is denied, the electronic apparatus may repeat the above-described process or change the data type to be used during the process.

The notification of such an authentication result may be providing the user interface window for controlling the electronic apparatus or transmitting data corresponding to the user interface window.

Meanwhile, the connection between two devices by using BLE is described with reference to FIG. 5. However, in implementation, the electronic apparatus may use another wireless connection method such as Wi-Fi Direct instead of the wireless connection method described above.

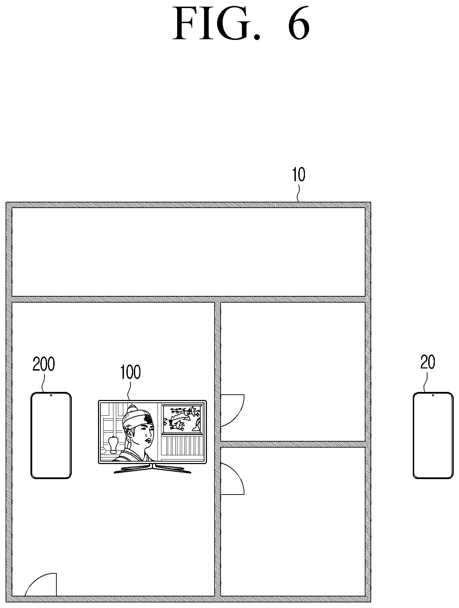

FIG. 6 is a diagram for describing an operation in response to the authentication request from another terminal device according to an embodiment of the present disclosure. In detail, FIG. 6 is a diagram for describing various connection methods between the electronic apparatus if the electronic apparatus is located in a home.

Referring to FIG. 6, the electronic apparatus 100 may be located in a home 10, and the user terminal device 200 may also be located in the home 10. In addition, a terminal device 20 of another user may also be located outside the home.

In the above-described environment, if the user performs the authentication procedure on the electronic apparatus, the wireless signal strength between the electronic apparatus 100 and the terminal device 200 may be very high. In addition, even if the electronic apparatus outputs the audio, the terminal device 200 may obtain the sound very accurately.

However, the terminal device 20 may be located outside the home, e.g., outside the wall. Accordingly, although the terminal device 20 may catch the wireless signal, the terminal device 20 is unable to obtain the screen of the electronic apparatus 100. In addition, it is difficult for the terminal device 20 to identify the sound output from the electronic apparatus 100. If the user views the image at a very high volume, although the terminal device 20 may obtain the sound, it is difficult for the terminal device 20 to obtain the high-frequency signal from the terminal device 20 because the sound transmitted through the wall is a relatively low-frequency signal.

If the terminal device 200 of the user who is the owner of the display is used, the terminal device and the electronic apparatus may be adjacent to each other, and a communication strength between the two devices may thus be high. In addition, the sound from the display device may also be recognized by the electronic apparatus 100 without significant distortion or interference.

However, if the terminal device 20 is located outside the user home and is adjacent to the display device, the terminal device 20 and the display device may transmit and receive the wireless signal each other. In this case, if the wireless connection is possible, the terminal device 20 may request the authentication from the display device.

However, as described above, the terminal device 20 may be located outside the user home, it is thus difficult for the terminal device 20 to perform primary authentication because it is not known what screen is being output from the electronic apparatus.

However, if the user operates the display at a very high volume and views a public broadcast, another user may perform the authentication operation by turning on the same broadcast on his or her display.

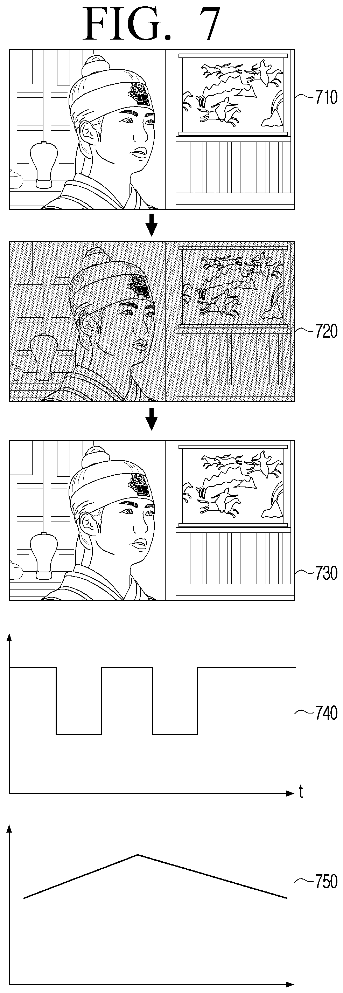

Even if the authentication is performed in this way, the electronic apparatus may perform the authentication not only by using the image but also by using various additional information if the communication strength between the electronic apparatus and the terminal device is low. For example, as described below with reference to FIG. 7, the electronic apparatus may change image brightness and determine whether the brightness change is detected. Alternatively, the electronic apparatus may capture the entire display showing the screen to obtain the corresponding screen size or model, and compare the characteristic information such as the obtained size or the model name with the device information about the display device, thereby performing the authentication procedure.

Alternatively, the electronic apparatus may output inaudible sound and determine whether this sound is included in the captured image. In this case, the inaudible sound may belong to an ultrasonic region. For example, as shown in the drawing, although a low-frequency sound may be transmitted by passing through the wall of the home, the high-frequency signal is highly likely to fail to pass through the wall.

Therefore, using the voice signal in this way may not be recognized by the user's ears, and the electronic apparatus may thus perform the authentication operation without interfering with image viewing by the user.

FIG. 7 is a diagram for describing the screen display operation according to an embodiment of the present disclosure.

Referring to FIG. 7, the electronic apparatus 100 may output the image. Here, the electronic apparatus 100 may gradually modify the image brightness as shown in a time series (710 -> 720 -> 730). For example, the electronic apparatus 100 may perform an operation for reducing the image brightness in a specific interval, such as a first pattern 740, or perform an operation for increasing the brightness for the predetermined time, and then reducing the brightness again after the predetermined time, such as a second pattern 750.

In this way, if the screen brightness changes and the brightness change is detected in the captured image captured by the user, the electronic apparatus may determine that the user directly captures the display. That is, even if the display device used by another user accidentally displays the same image as the screen of the electronic apparatus, the display device used by another user is unable to follow the aforementioned brightness change. Therefore, the electronic apparatus may perform the authentication by using the screen brightness change.

Meanwhile, the illustrated example shows and describes an example of changing the screen brightness. However, in implementation, the electronic apparatus may use another pattern instead of the brightness change pattern as shown in the drawing.

In addition, the illustrated example shows that the electronic apparatus 100 adjusts the screen brightness for an entire region of the screen. However, in implementation, the electronic apparatus 100 may adjust the screen brightness only for some regions of the screen. For example, the electronic apparatus 100 may output an image having default brightness for one second, and then adjust only an outer region of the screen to have a lower brightness than a central region for the next one second. In implementation, instead of using the central and outer regions, the electronic apparatus 100 may adjust the screen brightness by classifying the region into left and right regions or into upper and lower regions.

In addition, in implementation, the electronic apparatus 100 may use an object displayed at a fixed position in the image for the predetermined time. For example, while the sea is displayed, the electronic apparatus 100 may change the brightness only for a region corresponding to the sea. Alternatively, the electronic apparatus 100 may analyze the image to classify a region having a lot of movement and a region having little movement. In addition, the region having a lot of movement may be a portion where a user gaze is often directed, and the electronic apparatus 100 may thus change the brightness for the region having a lot of movement, a farthest region, or the region having little movement.

FIG. 8 is a diagram showing an example of a guidance user interface (UI) that may be displayed on the terminal device according to an embodiment of the present disclosure.

Referring to FIG. 8, a user interface window 810 displays a guidance message. For example, the user interface window 810 is a message window that may be displayed if it is determined to use the information about the display device.

As described above, if the display displays the terrestrial broadcast, the display of another user who is not the owner of the display may output the same broadcast. Accordingly, the electronic apparatus 100 may perform the authentication by considering the characteristics of the actual display device if the terrestrial broadcast is displayed. For example, the electronic apparatus 100 may obtain the size or model of the display in the image by using the captured image, and perform the authentication procedure by comparing the obtained information with pre-known display information.

Meanwhile, to obtain the information about the display device, the terminal device may need not only the display screen but also the display appearance, and thus may need to capture the appearance. Therefore, if it is determined to also use the information about the display device, the terminal device may display the guidance message for capturing the appearance, as shown in FIG. 8.

Meanwhile, although the above description describes that the electronic apparatus uses the model based on the screen size and the external appearance, the electronic apparatus may additionally use a screen ratio. For example, if an image having a ratio of 4:3 is displayed on a display having a ratio of 16:9, the image may be displayed in various ways (or ratios). The display form may be different for each user, and the electronic apparatus may thus also use the display method and form as the information about the display device.

FIG. 9 is a diagram showing an example of a guidance UI that may be displayed on the terminal device according to an embodiment of the present disclosure.

Referring to FIG. 9, a user interface window 910 may display a guidance message. For example, the user interface window 910 is a message window that may be displayed if an image captured for the predetermined time is used. For example, the terminal device may use the screen brightness pattern as shown in FIG. 8.

As described above, if the display displays the terrestrial broadcast, the display of another user who is not the owner of the display may also output the same broadcast.

In this case, another display screen may also output the same screen. In this case, if only the image displayed on the screen is used, the authority to use the display or the electronic apparatus may be accidentally granted to another user. To prevent this issue, the electronic apparatus may change the screen brightness for the predetermined time within a range that the user is unable to perceive or within a range that the user is unable to perceive as uncomfortable, as shown in FIG. 7.

To determine such a change, the terminal device may need to capture the image for the predetermined time. For example, the terminal device may need to capture the screen for the predetermined time or more, or need to perform an operation for capturing the screen at the predetermined time interval for the predetermined time. Therefore, the terminal device may display the guidance message instructing the user to maintain the screen capture for the predetermined time or more to ensure the capture operation to be performed for the predetermined time.

Meanwhile, in implementation, if the image capture for a sufficient time is completed, the terminal device may also output a guidance voice or a guidance message indicating that the capture operation may be stopped.

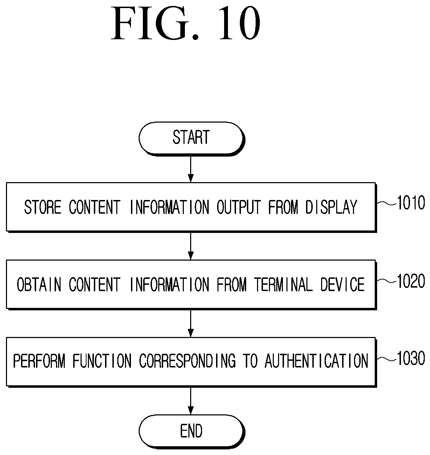

FIG. 10 is a flowchart for describing a controlling method of an electronic apparatus according to an embodiment of the present disclosure.

Referring to FIG. 10, the electronic apparatus may store content information related to the image to be displayed on the display (1010). Here, the content information may include at least one of the image information, the audio information, the device information, or the brightness change pattern. The storage operation may be a method of continuously storing the image information within a predetermined time range, and the electronic apparatus may perform the storage operation if the authentication procedure is required or if the event information related to the capture is received from the terminal device during the authentication procedure. In addition, the electronic apparatus may terminate the storage operation if the authentication procedure is terminated or the captured image is received and the authentication is no longer required.

The electronic apparatus may determine in advance the data type to be used for the authentication, and perform the storage operation based on the determined type. For example, the data type may include the image, the audio, the image and the audio, the image and the device information, or the image and the brightness change pattern.

For example, the electronic apparatus may determine the data type based on the image type and the degree of change in the image. For example, if the user views the terrestrial broadcast that may be easily obtained by other users, the electronic apparatus may determine to use the audio together with the image, to use the information about the display device together with the image, to use the screen brightness pattern together with the image, or to use inaudible sound frequency output together with the image. Here, the electronic apparatus may determine the data type by using the information other than the image if the image currently output is the static image having little change.

In addition, the electronic apparatus may measure the wireless signal strength between the electronic apparatus and the terminal device in advance, and determine the data type based on whether the measured wireless signal strength is less than or equal to a predetermined value. For example, in the state where the terminal device and the electronic apparatus are expected to be located within 1 m of each other and have very good reception strength, the electronic apparatus may determine to perform the authentication by using only the image, even while the normal broadcast image is displayed. Conversely, if the wireless signal is expected to be somewhat distant, such as passing through the wall, the electronic apparatus may use another method, rather than using only the image.

If the user views the image that is not easy for other users to obtain, the electronic apparatus may determine to use only the image.

In addition, the electronic apparatus may provide the information about the data type to the terminal device to enable the terminal device to provide information corresponding to the data type. Here, the electronic apparatus may also transmit the information about the capture method to the terminal device. For example, the electronic apparatus may provide guidance indicating that the entire appearance of the display device needs to be captured if the information about the display device is also used. In addition, if the audio signal is used, the terminal device 200 may provide the guidance message instructing the user to capture the image at a nearby location to the electronic apparatus.

In addition, the electronic apparatus may store data corresponding to the determined data type if the data type is determined. For example, the electronic apparatus may store an image corresponding to the image in the predetermined interval unit, or store all the frames within the predetermined interval.

If it is determined to use the audio, the electronic apparatus may store the audio data. In addition, the electronic apparatus may store the brightness pattern applied to the image if it is determined to use the predetermined brightness pattern.

In addition, if the inaudible sound is used, the electronic apparatus may store the used sound information. In addition, the electronic apparatus may obtain the information about the display device if it is determined to use the information about the display device. The electronic apparatus may obtain and store the information about the display device in advance. If the information about the display device is unable to be obtained, the electronic apparatus may exclude using the information about the display device in the prior data type determination process.

In addition, the electronic apparatus may obtain the content information from the terminal device (1020). For example, the electronic apparatus may receive the information corresponding to the data type notified to the terminal device in the prior process. For example, the content information may be the data corresponding to the image obtained using the camera included in the terminal device, or may be the audio data or the video. Accordingly, the captured image may include only the image, or may also include the audio.

The electronic apparatus may request the terminal device to re-capture and transmit the image if the screen is not identified in the captured image if the display device is captured in such a way that the display device is not identified in the captured image although it is determined to use the device information about the display device, or if the image quality of the captured image is not legitimacy for use in the authentication process.

If the captured image is received, the electronic apparatus may perform the function corresponding to the authentication corresponding to the determined data type (1030). For example, if the determined data type is determined to use only the image, the electronic apparatus 100 may compare the pre-stored image with the received image to determine whether the images match.

For example, the electronic apparatus may obtain one image from the received images and perform the authentication by determining whether the obtained image matches one of the pre-stored images. The electronic apparatus may consider the event information related to the camera capture and the latency information notified by the terminal device during the process of selecting the image to be used for the authentication.

If it is determined to use the screen change pattern, the electronic apparatus may determine the brightness of the received captured image in the frame unit or the predetermined time unit, and perform the authentication by determining whether the brightness change has the pre-stored brightness change pattern.

Here, if the determined data type is determined to also use the audio information, the electronic apparatus may extract the audio information from the received image and compare the extracted audio information with the pre-stored audio to determine whether the information match.

Here, in determining whether the audios match, the electronic apparatus may not only use whether the similar sound patterns match, but also consider whether the volume of the audio is greater than or equal to the predetermined level. In addition, to compare whether the audios match, the electronic apparatus may perform the comparison operation by using only the mid- and high-band frequencies among the various frequency bands included in the audio, or by applying the weight to the high-band frequencies.

Meanwhile, if the inaudible frequency pattern is added to the audio signal, the electronic apparatus may determine whether the corresponding inaudible frequency band pattern is included in the audio signal.

Alternatively, the electronic apparatus may obtain the characteristic information including at least one of the display screen size or the model information in the captured image based on the captured image, and may perform the authentication for the terminal device (the function corresponding to the authentication) based on the comparison between the received characteristic information with the pre-stored device information as well as whether the captured image and the image information match.

Meanwhile, if the communication latency information between the terminal device and the electronic apparatus is obtained, the electronic apparatus may obtain the image to be used for the authentication among the stored image information based on the communication latency information during the authentication process described above, and perform the image comparison operation based on the obtained image.

As described above, the controlling method of an electronic apparatus according to the present disclosure may perform the authentication procedure without any additional modification to the screen displayed on the display, and thus perform the authentication procedure without interfering with the user's viewing.

Meanwhile, the operations such as the image comparison are shown and described above as being performed by the electronic apparatus. However, in implementation, the electronic apparatus may delegate the comparison operation to the terminal device. For example, the terminal device may capture the image, the electronic apparatus may mix the actual displayed image with a fake image that is not displayed and transmit the images to the terminal device, the terminal device may compare a plurality of images with the captured image and transmit a comparison result to the electronic apparatus, and the electronic apparatus may perform the authentication based on only the comparison result.

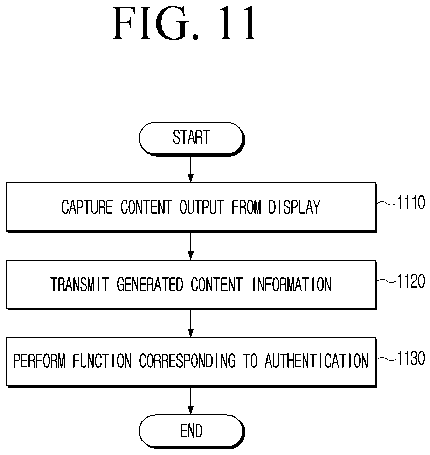

FIG. 11 is a flowchart for describing a controlling method of a terminal device according to an embodiment of the present disclosure.

Referring to FIG. 11, the terminal device may capture the content displayed on the display (1110). The terminal device may receive in advance the information about the data type (e.g., the image, the voice, the image and the voice) to be used for the authentication from the electronic apparatus, and capture only the image displayed on the display or capture the video in which the image and the voice are combined, based on the received data type.

Here, the terminal device may capture one frame, that is, capture the image or the video. Alternatively, the terminal device may capture the image at the predetermined time interval. If the data type is received, the terminal device may perform the capture in the way corresponding to the received data type.

Here, the terminal device 200 may transmit the information about the capture time point to the electronic apparatus 100. The time point information may be the information used for capturing or storing the image displayed on the display. Through this operation, the electronic apparatus may minimize the information required for the authentication.

The terminal device may transmit the captured content to the electronic apparatus 100(1020). For example, if the image is captured, the terminal device may transmit the captured image to the electronic apparatus 100.

In addition, if the authentication is performed using the transmitted captured image, the terminal device may perform the authentication procedure in response to the permission from the electronic apparatus 100. Accordingly, the terminal device 200 may control the electronic apparatus (1130).

As described above, the controlling method of a terminal device according to the present disclosure may use the screen currently displayed on the display as it is rather than using the QR code or the PIN number that obscures the screen of the electronic apparatus, and thus perform the authentication for the terminal device without interfering with the user's viewing or other users' viewing.

Meanwhile, the methods according to at least some of the various embodiments of the present disclosure described above may be implemented in the form of an application capable of being installed on a conventional electronic apparatus.

In addition, the methods according to at least some of the various embodiments of the present disclosure described above may be implemented only by software upgrade or hardware upgrade of the conventional electronic apparatus.

In addition, the methods according to at least some of the various embodiments of the present disclosure described above may be performed through an embedded server disposed in the electronic apparatus, or at least one external server of the electronic apparatus.

Meanwhile, according to an embodiment of the present disclosure, the various embodiments described above may be implemented in software including an instruction stored in a machine-readable storage medium (for example, a computer-readable storage medium). A machine may be an apparatus that invokes the stored instruction from the storage medium, may be operated based on the invoked instruction, and may include the electronic apparatus (e.g., the electronic apparatus, the display device, or the terminal device) according to the disclosed embodiments. If the instruction is executed by the processor, the processor may perform a function corresponding to the instruction directly or by using another component under control of the processor. The instruction may include a code provided or executed by a compiler or an interpreter. The machine-readable storage medium may be provided in the form of a non-transitory storage medium. Here, the "non-transitory storage medium" may refer to a tangible device and only indicate that this storage medium does not include a signal (e.g., electromagnetic wave), and this term does not distinguish a case where data is stored semi-permanently in the storage medium and a case where data is temporarily stored in the storage medium from each other. For example, the "non-transitory storage medium" may include a buffer in which data is temporarily stored. According to an embodiment, the methods according to the various embodiments disclosed in the present disclosure may be included and provided in a computer program product. The computer program product may be traded as a commodity between a seller and a purchaser. The computer program product may be distributed in a form of the machine-readable storage medium (e.g., a compact disc read only memory (CD-ROM)), or may be distributed online (e.g., by download or upload) via an application store (e.g., PlayStore^{TM}) or directly between two user devices (e.g., the terminal devices). In case of the online distribution, at least a part of the computer program product (e.g., downloadable app) may be at least temporarily stored or temporarily provided in the machine-readable storage medium such as a server memory of a manufacturer, a server memory of an application store, or a relay server memory.

The various embodiments of the present disclosure may be implemented by software including an instruction stored in the machine-readable storage medium (for example, the computer-readable storage medium). A machine may be an apparatus that invokes the stored instruction from the storage medium, may be operated based on the invoked instruction, and may include the electronic apparatus (e.g., the electronic apparatus 100) according to the disclosed embodiments.

If the above-described instruction is executed by the processor, the processor may directly perform a function corresponding to the above-described instruction or other components may perform the function corresponding to the above-described instruction under a control of the above-described processor. The instruction may include a code provided or executed by a compiler or an interpreter.

Although the embodiments of the present disclosure are shown and described as above, the present disclosure is not limited to the above-mentioned specific embodiments, and may be variously modified by those skilled in the art to which the present disclosure pertains without departing from the gist of the present disclosure as claimed in the accompanying claims. These modifications should also be understood to fall within the scope and spirit of the present disclosure.

## Claims

1. An electronic apparatus (100, 100') comprising:
a communication device (110) configured to communicate with a terminal device (200);
a memory (120) storing at least one instruction; and
at least one processor (130) configured to execute the at least one instruction,
wherein the at least one processor (130) is configured to
store image information corresponding to an image in the memory (120),
receive, from a terminal device (200) through the communication device (210), data corresponding to the image obtained using a camera (250) included in the terminal device (200), and
perform a function corresponding to authentication for the terminal device (200) based on the data received from the terminal device (200) and the information corresponding to the image.

2. The apparatus as claimed in claim 1, wherein the at least one processor (130) is configured to:
control a screen brightness to change within a predetermined time, and
perform the function corresponding to the authentication for the terminal device (200) based on correspondence between the data received from the terminal device (200) and the information corresponding to the image and a brightness change pattern corresponding to the change in the screen brightness.

3. The apparatus as claimed in claim 1 or 2, wherein the at least one processor (130) is configured to:
obtain characteristic information including at least one of a screen size or model information corresponding to the electronic apparatus (100, 100') based on the data received from the terminal device (200), and
perform the function corresponding to the authentication for the terminal device (200) based on correspondence between the data received from the terminal device (200) and the information corresponding to the image and the characteristic information.

4. The apparatus as claimed in any one of the preceding claims, wherein the at least one processor (130) is configured to:
obtain a data type corresponding to the authentication based on the image, and
control the communication device (110) to transmit information corresponding to the obtained data type to the terminal device (200).

5. The apparatus as claimed in any one of the preceding claims, wherein the at least one processor (130) is configured to store the information corresponding to the image output from the electronic apparatus (100, 100') in the memory (120) if information related to obtaining the data corresponding to the image is received from the terminal device (200) by using the camera (250) included in the terminal device (200) through the communication device (110).

6. The apparatus as claimed in claim 5, wherein the at least one processor (130) is configured to:
obtain information corresponding to communication latency between the terminal device (200) and the electronic apparatus (100, 100'), and
obtain an image serving as a basis of the function corresponding to the authentication among the information corresponding to the image based on the information corresponding to the communication latency.

7. The apparatus as claimed in any one of the preceding claims, wherein the at least one processor (130) is configured to:
control the memory (120) to store audio information corresponding to the image, and
perform the function corresponding to the authentication for the terminal device (200) based on audio information included in the data received from the terminal device (200) and the audio information corresponding to the image.

8. The apparatus as claimed in claim 7, wherein the at least one processor (130) is configured to perform the function corresponding to the authentication for the terminal device (200) by using the audio information included in the data received from the terminal device (200) and audio information having a predetermined frequency or higher among the audio information corresponding to the image.

9. The apparatus as claimed in claim 7 or 8, comprising a speaker (170),
wherein the at least one processor (130) is configured to:
control the speaker (170) to output an audio signal having a predetermined pattern at an inaudible frequency, and
perform the function corresponding to the authentication for the terminal device (200) if the predetermined pattern is included in audio information included in the data received from the terminal device (200).

10. The apparatus as claimed in any one of the preceding claims, wherein the at least one processor (130) is configured to control the communication device (110) to transmit at least one of state information of the electronic apparatus (100, 100') or information related to a user interface, UI, corresponding to control of the electronic apparatus (100, 100') to the terminal device (200) if the function corresponding to the authentication for the terminal device (200) is performed.

11. A controlling method of an electronic apparatus (100, 100'), the method comprising:
storing image information corresponding to an image;
receiving, from a terminal device (200), data corresponding to the image obtained using a camera (250) included in the terminal device (200); and
performing a function corresponding to authentication for the terminal device (200) based on the data received from the terminal device (200) and the information corresponding to the image.

12. The method as claimed in claim 11, comprising controlling screen brightness to change within a predetermined time,
wherein in the performing of the function,
the function corresponding to the authentication for the terminal device (200) is performed based on correspondence between the data received from the terminal device (200) and the information corresponding to the image and a brightness change pattern corresponding to the change in the screen brightness.

13. The method as claimed in claim 11 or 12, wherein in the performing of the function,
characteristic information including at least one of a screen size or model information corresponding to the electronic apparatus (100, 100') is obtained based on the data received from the terminal device (200), and
the function corresponding to the authentication for the terminal device (200) is performed based on correspondence between the data received from the terminal device (200) and the information corresponding to the image and the characteristic information.

14. The method as claimed in any one of claims 11 to 13, comprising:
obtaining a data type corresponding to the authentication based on the image; and
transmitting information corresponding to the obtained data type to the terminal device (200).

15. A non-transitory computer-readable recording medium storing a program for executing a controlling method of an electronic apparatus (100, 100'), the method includes
storing image information corresponding to an image,
receiving, from a terminal device (200), data corresponding to the image obtained using a camera (250) included in the terminal device (200), and
performing a function corresponding to authentication for the terminal device (200) based on the data received from the terminal device (200) and the information corresponding to the image.
